# FASCICULE DE BREVET EUROPEEN

(11) **EP 1 681 224 B1**
(45) Date de publication et mention de la délivrance du brevet: **09.01.2008**
(21) Numéro de dépôt: 05292492.5
(22) Date de dépôt: 24.11.2005
(51) Int. Cl.: B62D 1/19

(54) **Ensemble de colonne de direction rétractable en cas de choc, et véhicule automobile équipé d'un tel ensemble**
Im Fall eines Stosses zurückziehbare Lenksäuleneinheit, und Kraftfahrzeug mit einer solchen Einheit
In case of shock retractable steering column unit, and motor vehicle with such an unit

(30) Priorité: 12.01.2005 FR 0500316
(43) Date de publication de la demande: 19.07.2006
(73) Titulaire: Fuji Autotech France SAS, 25350 Mandeure (FR)
(72) Inventeur: Lidoine, Eric, 25700 Mathay (FR)
(74) Mandataire: Habasque, Etienne J. Jean-François

(56) Documents cités:
- DE-A1- 3 039 040
- FR-A- 2 785 863
- PATENT ABSTRACTS OF JAPAN vol. 2000, no. 09, 13 octobre 2000 (2000-10-13) -& JP 2000 159043 A (KOYO SEIKO CO LTD), 13 juin 2000 (2000-06-13)

## Description

La présente invention concerne un ensemble de colonne de direction rétractable en cas de choc pour véhicule automobile, du type comprenant :
- un arbre de direction s'étendant suivant une direction longitudinale et rétractable en cas de choc ;
- un support d'arbre de direction et de montage de l'ensemble dans un véhicule automobile, ce support comprenant au moins une première partie rigide et une deuxième partie rigide espacées longitudinalement, et une partie intermédiaire déformable située longitudinalement entre la première partie et la deuxième partie, la première partie, la deuxième partie et la partie intermédiaire étant venues de matière, et la partie intermédiaire étant adaptée, en cas de choc, pour se déformer pour permettre le rapprochement de la première partie et de la deuxième partie suivant la direction longitudinale ; et
- des moyens de renfort transversal de la partie intermédiaire.

Un tel ensemble de colonne de direction permet d'améliorer la sécurité du conducteur d'un véhicule automobile lors d'un accident.

En cas de choc, la déformation longitudinale de l'ensemble de colonne de direction permet, d'une part, d'éviter une intrusion de la colonne de direction vers l'intérieur dans l'habitacle du véhicule automobile, et d'autre part, d'amortir le choc du conducteur avec le volant.

En fonctionnement normal, il est souhaitable que l'ensemble de colonne de direction présente une rigidité suffisante, notamment pour éviter la remontée de vibrations vers le volant. La partie intermédiaire déformable possède une rigidité inférieure à celle des parties rigides, et favorise la remontée des vibrations. Les moyens de renfort transversal de la partie intermédiaire sont destinés à rigidifier le support transversalement à la direction longitudinale de l'arbre de direction.

Le document FR 2 785 863 décrit un ensemble du type précité. Néanmoins, cet ensemble de colonne de direction présente un coût de fabrication élevé du fait de sa complexité.

Un but de la présente invention est de fournir un ensemble de colonne de direction rétractable en cas de choc de coût de fabrication réduit.

A cet effet, l'invention propose un ensemble de colonne de direction du type précité, caractérisé en ce que les moyens de renfort transversal comprennent au moins une patte venue de matière avec une des première et deuxième parties, et s'étendant en direction de l'autre de ces première et deuxième parties, une extrémité de la patte s'appuyant sur cette autre partie.

Selon d'autres modes de réalisation, l'ensemble de colonne de direction comprend l'une ou plusieurs des caractéristiques suivantes, prise(s) isolément ou selon toutes les combinaisons techniquement possibles :
- les moyens de renfort comprennent deux pattes diamétralement opposées relativement à l'axe de l'arbre de direction ;
- les moyens de renfort transversal comprennent des moyens d'immobilisation transversale de l'extrémité de la ou chaque patte sur la partie sur laquelle l'extrémité est en appui ;
- les moyens d'immobilisation sont venus de matière avec la partie sur laquelle l'extrémité est en appui ;
- les moyens d'immobilisation comprennent au moins une griffe formée par découpe et pliage dans la partie sur laquelle l'extrémité est en appui ;
- la ou chaque griffe est repliée autour d'un bord longitudinal de la patte ;
- la ou chaque griffe est formée dans une région d'extrémité longitudinale de la partie sur laquelle l'extrémité est en appui ;
- les moyens de renfort transversal comprennent au moins une première patte venue de matière avec la première partie, et s'étendant en direction de la deuxième partie, une extrémité de la première patte s'appuyant sur la deuxième partie, et une deuxième patte venue de matière avec la deuxième partie, et s'étendant en direction de la première partie, une extrémité de la deuxième patte s'appuyant sur la première partie ;
- la partie intermédiaire comprend plusieurs languettes s'étendant sensiblement longitudinalement entre la première partie et la deuxième partie, les languettes étant prédéformées radialement pour contrôler la déformation longitudinale de la partie intermédiaire.

L'invention concerne également un véhicule automobile comprenant un ensemble de colonne de direction tel que défini ci-dessus.

L'invention et ses avantages seront mieux compris à la lecture de la description qui va suivre, donnée uniquement à titre d'exemple, et faite en se référant aux dessins annexés, sur lesquels :
- la figure 1 est une vue en perspective d'un ensemble de colonne de direction conforme à l'invention ;
- la figure 2 est une vue en coupe selon II-II de l'ensemble de colonne de direction de la figure 1 ;
- la figure 3 est une vue de dessus de l'ensemble de colonne de direction de la figure 1 ; et
- la figure 4 est une vue de dessus d'une tôle découpée pour former par roulage un support de l'ensemble de la figure 1.

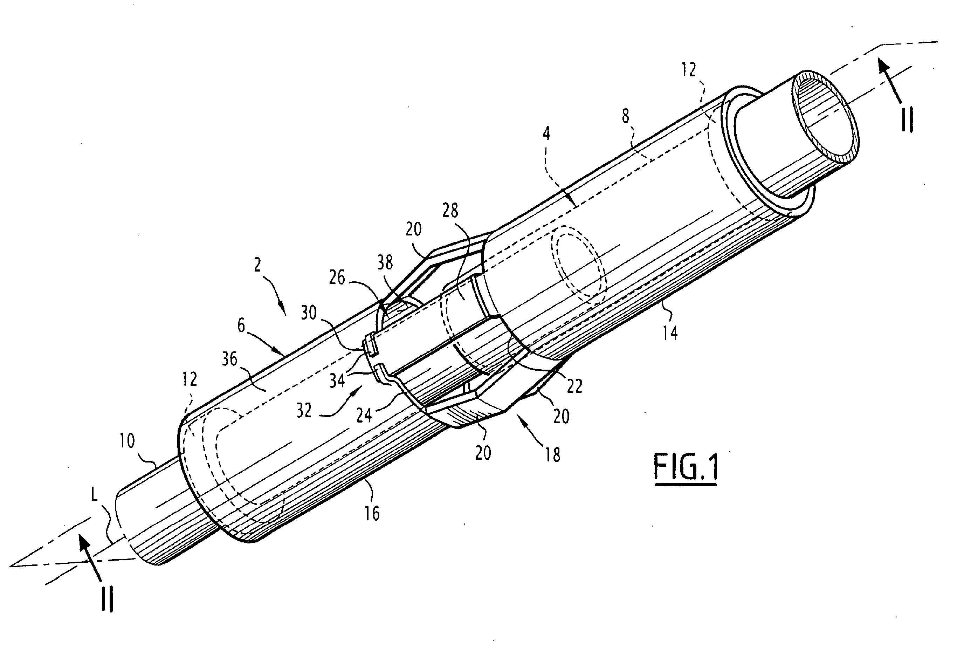

La figure 1 illustre un ensemble de colonne de direction 2 comprenant un arbre de direction 4 s'étendant suivant un axe longitudinal L et un support 6 d'arbre de direction et de montage de l'ensemble dans un véhicule automobile.

L'arbre de direction 4 est destiné à être relié à une extrémité arrière et supérieure à un volant de direction, et, à une extrémité opposée, à un système de direction permettant de braquer les roues du véhicule automobile.

L'arbre de direction 4 est rétractable en cas de choc, suivant sa direction longitudinale L.

Pour ce faire, l'arbre de direction 4 comprend un premier tube 8 et un deuxième tube 10 montés de façon télescopique l'un sur l'autre, chaque tube étant libre de coulisser suivant la direction L le long de l'autre tube.

Les tubes 8 et 10 sont solidarisés en rotation autour de la direction L, par exemple à l'aide de cannelures non représentées.

Le support 6 est de forme générale tubulaire s'étendant suivant la direction longitudinale L.

L'arbre de direction 4 est guidé en rotation autour de l'axe longitudinal L, à l'intérieur du support 6, par l'intermédiaire de moyens de guidage 12 interposés entre l'arbre de direction 4 et le support 6, par exemple des paliers, notamment des roulements à billes.

Le support 6 comprend une première partie rigide tubulaire 14 arrière et une deuxième partie rigide tubulaire 16 avant. La première partie 14 et la deuxième partie 16 sont espacées suivant la direction longitudinale L.

Le support 6 comprend une partie intermédiaire déformable 18 située longitudinalement entre la première partie 14 et la deuxième partie 16.

La partie intermédiaire 18 se présente sous la forme de languettes 20 venues de matière avec la première partie 14 et la deuxième partie 16, et s'étendant sensiblement longitudinalement entre un bord avant 22 de la première partie 14 et un bord arrière 24 de la deuxième partie 16. Les languettes 20 sont par exemple au nombre de quatre, seules trois d'entre elles étant visibles sur la figure 1.

Les languettes 20 sont prédéformées radialement vers l'extérieur, en étant par exemple légèrement cambrées ou pliées sensiblement en leur milieu.

Les moyens de guidage 12 sont interposés, d'une part, entre la partie 14 et le tube 8 et, d'autre part, entre l'extrémité avant de la partie 16 et le tube 10. De façon connue en soi, chaque tube 8, 10 est lié axialement, en cas de choc, à la partie 14, 16 correspondante, par l'intermédiaire des moyens de guidage 12, dont la liaison axiale aux tubes 8, 10 et aux parties 14, 16 est assurée par un serrage suffisant ou par exemple à l'aide de butées axiales.

La liaison télescopique entre les tubes 8, 10, se situe à l'intérieur du support 6 longitudinalement entre les moyens de guidage 12.

Le support 6 comprend des moyens de renfort transversal 26 de la partie intermédiaire 18.

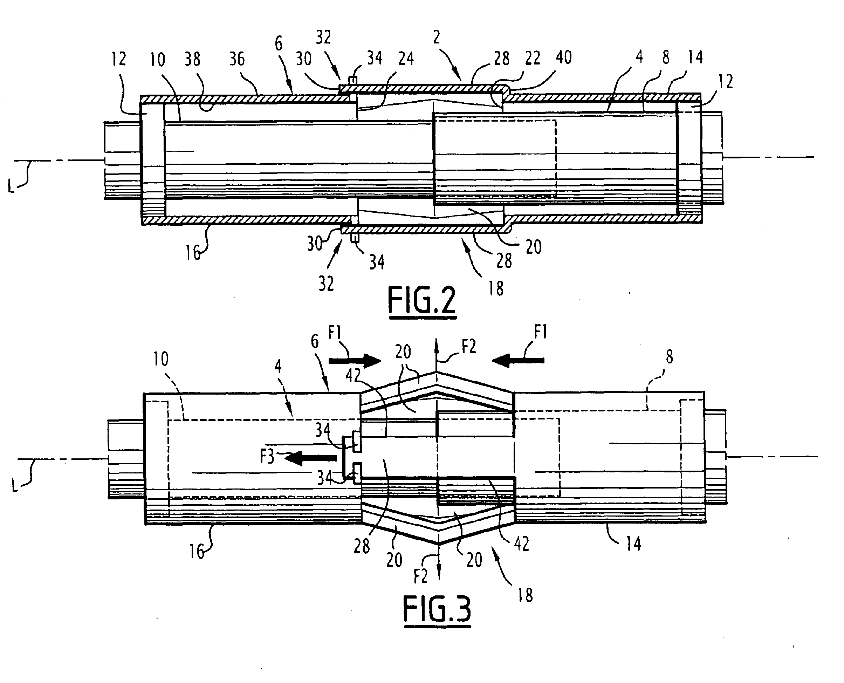

Les moyens de renfort transversal 26 comprennent au moins une patte 28 venue de matière avec la première partie 14 et s'étendant à partir du bord avant 22 en direction de la deuxième partie 16. Comme on peut mieux le voir sur la figure 2, le support 6 comprend deux pattes 28 diamétralement opposées par rapport à la direction longitudinale L.

Un extrémité 30 de chaque patte 28 opposée à la première partie 14 est en appui sur la deuxième partie 16, dans une région d'extrémité située au voisinage de son bord avant 24.

Le support 6 comprend des moyens d'immobilisation 32 de l'extrémité 30 relativement à la deuxième partie 16 suivant une direction transversale à la direction longitudinale L.

Les moyens d'immobilisation 32 comprennent des griffes 34 découpées dans le bord 24 de la deuxième partie 16 et pliées en L de façon à définir avec la surface extérieure 36 de la deuxième partie 16 un passage longitudinal dans lequel est insérée l'extrémité 30.

Chaque patte 28 vient en appui, sans jeu radial, sur la surface extérieure 36 de la deuxième partie 16, et les griffes 34 sont repliées au-dessus de l'extrémité 30. En variante, la patte 28 vient en appui sur la surface intérieure 38 de la deuxième partie 16 et les griffes 34 passent au-dessous de l'extrémité 30.

Chaque patte 28 se situe circonférentiellement entre deux languettes 20. Les pattes 28 et les languettes 20, ici au nombre total de six, sont régulièrement réparties autour de l'axe L.

Chaque patte 28 possède un décrochement 40 radialement vers l'extérieur ou l'intérieur permettant à la patte 28 de venir en appui sur la surface extérieure 36 ou intérieure de la partie 16. Le décrochement 40 se situe par exemple à l'extrémité proximale (relativement à la partie 14) de chaque patte 28.

En l'absence de choc, les languettes 20 confèrent une rigidité longitudinale suffisante au support 6. Par ailleurs, les languettes 20 confèrent au support 6 une rigidité transversale qui est augmentée par la présence des pattes 28, qui sont solidaires de la partie 14 et coopèrent avec la partie 16.

Comme illustré par les flèches F1 sur la figure 3, en cas de choc provoquant un effort longitudinal sur l'arbre de direction 4, les tubes 8, 10 coulissent l'un dans l'autre pour permettre la rétraction de l'arbre de colonne 4.

Le support 6, dont les parties 14 et 16 sont liées axialement aux tubes respectivement 8 et 10, se rétracte également par déformation de sa partie intermédiaire 18.

Pour permettre la déformation du support 6, et de façon classique, la deuxième partie 16 est par exemple fixée rigidement sur la structure du véhicule, et la première partie 14 est reliée à cette structure par des moyens de liaison, non représentés, débrayables en cas de choc.

Les languettes 20 se déforment radialement vers l'extérieur comme illustré par les flèches F2. Cette déformation programmée permet le rapprochement de la première partie 14 et de la deuxième partie 16 avec une absorption d'énergie étudiée pour limiter un traumatisme subi par le conducteur percutant le volant.

En revanche, les pattes 28 sont libres de glisser entre les griffes 34 et sur la surface extérieure 36 sans être retenues longitudinalement (comme illustré par la flèche F3). Ainsi, les pattes 28 n'interfèrent pas avec la déformation programmée des languettes 20.

Les pattes 28 et les griffes 34 forment en outre des moyens de guidage longitudinal entre les parties 14 et 16 lors de la déformation du support 6, assurant une déformation satisfaisante des languettes 20.

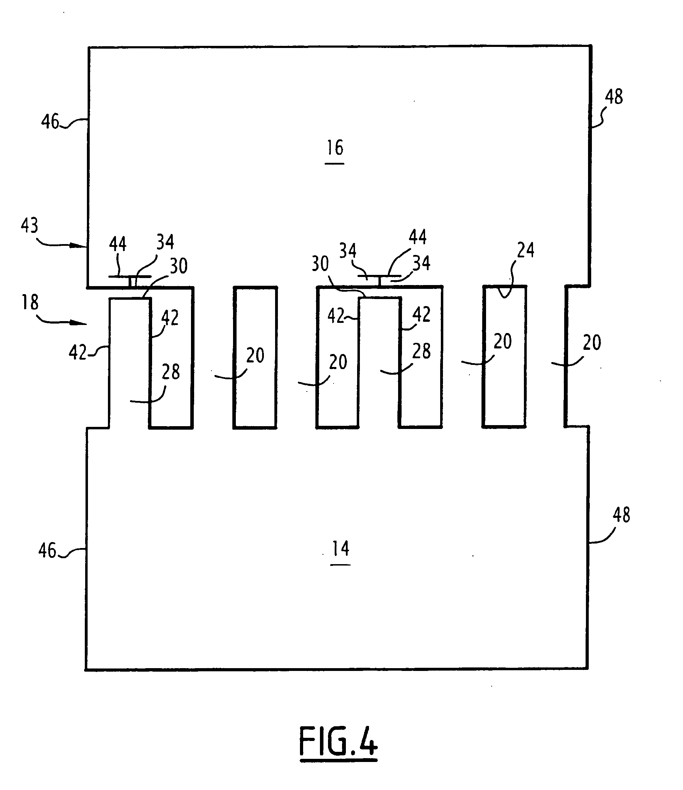

Comme illustré sur la figure 4, le support 6 est réalisé par exemple à partir d'une tôle 43 constituant la développée autour de la direction longitudinale L du support 6.

La tôle 43 présente une forme générale rectangulaire et comprend une bande intermédiaire découpée pour former les languettes 20 et les pattes 28. Les parties 14 et 16 se situent de part et d'autre de cette bande.

Les griffes 34 sont formées en ménageant des découpes en T 44 sur le bord arrière 24 de la partie 16 en regard des pattes 28. Une découpe en T est formée par une fente longitudinale formant le pied du T et débouchant sur le bord 24 de la deuxième partie 16, et une fente transversale.

La tôle 43 découpée est ensuite pliée par roulage autour de la direction longitudinale L jusqu'à joindre les bords longitudinaux 46, 48 opposés de la tôle 43, et à les fixer l'un sur l'autre, par exemple par soudage le long d'un joint ou mise en prise de reliefs non représentés.

Ensuite, les griffes 34 sont ouvertes, les pattes 28 sont déformées pour obtenir les décrochements 40, puis les languettes 20 sont à leur tour prédéformées. Cette dernière opération provoque un rapprochement longitudinal des parties 14 et 16, de sorte que les extrémités 30 des pattes 28 viennent en appui sur le bord 24 entre les griffes 34. Les griffes 34 sont ensuite repliées autour de bords longitudinaux 42 des pattes 28.

Dans des variantes possibles :
- une première patte 28 est venue de matière avec la partie 14 et s'appuie sur la partie 16, et une deuxième patte 28 est venue de matière avec la partie 16 et s'appui sur la partie 14 ;
- une seule griffe 34 est prévue pour chaque patte 28. Une telle griffe est formée par exemple par une découpe en L ;
- les griffes 34 sont formées à distance du bord 24.

Le nombre et la disposition des pattes 28 et des languettes 20 varient en fonction de l'amortissement longitudinal et du renfort transversal souhaité.

## Revendications

1. Ensemble de colonne de direction rétractable en cas de choc pour véhicule automobile, du type comprenant :
- un arbre de direction (4) s'étendant suivant une direction longitudinale (L) et rétractable en cas de choc ;
- un support (6) d'arbre de direction (4) et de montage de l'ensemble dans un véhicule automobile, ce support (6) comprenant au moins une première partie rigide (14) et une deuxième partie rigide (16) espacées longitudinalement, et une partie intermédiaire (18) déformable située longitudinalement entre la première partie (14) et la deuxième partie (16), la première partie (14), la deuxième partie (16) et la partie intermédiaire (18) étant venues de matière, et la partie intermédiaire (18) étant adaptée, en cas de choc, pour se déformer pour permettre le rapprochement de la première partie (14) et de la deuxième partie (16) suivant la direction longitudinale (L) ; et
- des moyens de renfort transversal (26) de la partie intermédiaire (18),
**caractérisé en ce que** les moyens de renfort transversal (26) comprennent au moins une patte (28) venue de matière avec une (14) des première et deuxième parties (14, 16), et s'étendant en direction de l'autre (16) de ces première et deuxième parties (14, 16), une extrémité (30) de la patte (28) s'appuyant sur cette autre partie (16).

2. Ensemble selon la revendication 1, **caractérisé en ce que** les moyens de renfort (26) comprennent deux pattes (28) diamétralement opposées relativement à l'axe de l'arbre de direction (L).

3. Ensemble selon la revendication 1 ou 2, **caractérisé en ce que** les moyens de renfort transversal comprennent des moyens d'immobilisation transversale de l'extrémité (30) de la ou chaque patte (28) sur la partie (16) sur laquelle l'extrémité (30) est en appui.

4. Ensemble selon la revendication 3, **caractérisé en ce que** les moyens d'immobilisation sont venus de matière avec la partie (16) sur laquelle l'extrémité (30) est en appui.

5. Ensemble selon la revendication 4, **caractérisé en ce que** les moyens d'immobilisation comprennent au moins une griffe (34) formée par découpe et pliage dans la partie (16) sur laquelle l'extrémité (30) est en appui.

6. Ensemble selon la revendication 5, **caractérisé en ce que** la ou chaque griffe (34) est repliée autour d'un bord longitudinal de la patte (28).

7. Ensemble selon l'une des revendications 5 ou 6, **caractérisé en ce que** la ou chaque griffe (34) est formée dans une région d'extrémité longitudinale de la partie (16) sur laquelle l'extrémité (30) est en appui.

8. Ensemble selon l'une quelconque des revendications précédentes, **caractérisé en ce que** les moyens de renfort transversal (26) comprennent au moins une première patte (28) venue de matière avec la première partie (14), et s'étendant en direction de la deuxième partie (16), une extrémité (30) de la première patte (28) s'appuyant sur la deuxième partie (16), et une deuxième patte (28) venue de matière avec la deuxième partie (16), et s'étendant en direction de la première partie (14), une extrémité (30) de la deuxième patte (28) s'appuyant sur la première partie (14).

9. Ensemble selon l'une quelconque des revendications précédentes, **caractérisé en ce que** la partie intermédiaire (18) comprend plusieurs languettes (20) s'étendant sensiblement longitudinalement entre la première partie (14) et la deuxième partie (16), les languettes (20) étant prédéformées radialement pour contrôler la déformation longitudinale de la partie intermédiaire (18).

10. Véhicule automobile comprenant un ensemble de direction selon l'une quelconque des revendications précédentes.

## Claims

1. Steering column assembly for a motor vehicle, which assembly is collapsible in the event of an impact and is of the type comprising:
- a steering shaft (4) which extends in a longitudinal direction (L) and is collapsible in the event of an impact;
- a support (6) for the steering column (4) and for mounting the assembly in a motor vehicle, the said support (6) comprising at least a first rigid part (14) and a second rigid part (16), which are spaced apart longitudinally, and a deformable intermediate part (18) which is situated longitudinally between the first part (14) and the second part (16), said first part (14), said second part (16) and said intermediate part (18) being in one piece and said intermediate part (18) being adapted to deform in the event of an impact in order to enable the first part (14) and the second part (16) to come closer together in the longitudinal direction (L); and
- means (26) for the transverse reinforcement of the intermediate part (18),
**characterised in that** the means (26) for transverse reinforcement comprise at least one strap (28) which is in one piece with one (14) of the first and second parts (14, 16) and extends in the direction of the other (16) of the said first and second parts (14, 16), one end (30) of said strap (28) resting on the said other part (16).

2. Assembly according to claim 1, **characterised in that** the reinforcing means (26) comprise two straps (28) which are diametrically opposed in relation to the axis (L) of the steering shaft.

3. Assembly according to claim 1 or 2, **characterised in that** the means for transverse reinforcement comprise means for the transverse immobilisation of the end (30) of the strap, or of each strap, (28) on the part (16) on which said end (30) is resting.

4. Assembly according to claim 3, **characterised in that** the immobilising means are in one piece with the part (16) on which the end (30) is resting.

5. Assembly according to claim 4, **characterised in that** the immobilising means comprise at least one claw (34) which is formed by cutting out and folding from the part (16) on which the end (30) is resting.

6. Assembly according to claim 5, **characterised in that** the claw, or each claw, (34) is folded over around one longitudinal edge of the strap (28).

7. Assembly according to either of claims 5 or 6,
**characterised in that** the claw, or each claw, (34) is formed in a longitudinal end region of the part (16) on which the end (30) is resting.

8. Assembly according to any of the preceding claims,
**characterised in that** means (26) for transverse reinforcement comprise at least one first strap (28) which is in one piece with the first part (14) and extends in the direction of the second part (16), one end (30) of said first strap (28) resting on said second part (16), and a second strap (28) which is in one piece with the second part (16) and extends in the direction of the first part (14), one end (30) of said second strap (28) resting on said first part (14).

9. Assembly according to any of the preceding claims,
**characterised in that** the intermediate part (18) comprises a number of small tongues (20) which extend substantially longitudinally between the first part (14) and the second part (16), said small tongues (20) being pre-deformed radially in order to control the longitudinal deformation of the intermediate part (18).

10. Motor vehicle comprising a steering assembly according to any of the preceding claims.

## Patentansprüche

1. Ein im Falle einer Erschütterung einziehbares Kolonnen-Ensemble für ein Kraftfahrzeug,
vom Typ umfassend:
- eine Lenkspindel (4), die sich entlang einer Längsrichtung (L) erstreckt und die im Falle einer Erschütterung einziehbar ist;
- ein Lager (6) der Lenkspindel (4) und des Ensemble-Zusammenbaus in einem Kraftfahrzeug, wobei dieses Lager (6) mindestens einen ersten starren Teil (14) und einen zweiten starren Teil (16) umfasst, die der Länge nach voneinander beabstandet sind, und einen verformbaren Zwischenteil (18), der sich der Länge nach zwischen dem ersten Teil (14) und dem zweiten Teil (16) befindet, wobei der erste Teil (14), der zweite Teil (16) und der Zwischenteil (18) aus dem gleichen Material sind, und der Zwischenteil (18) dazu ausgelegt ist, um sich im Falle einer Erschütterung zu verformen, um die Annäherung des ersten Teils (14) und des zweiten Teils (16) entlang der Längsrichtung (L) zu ermöglichen; und
- Querverstärkungsmittel (26) des Zwischenteils (18), **dadurch gekennzeichnet, dass** die Querverstärkungsmittel (26) mindestens eine Halterung (28) aus demselben Material wie einer (14) der ersten und zweiten Teile (14, 16) umfassen, und sich in Richtung des anderen (16) dieser ersten und zweiten Teile (14, 16) erstrecken, wobei sich ein Endstück (30) der Halterung (28) auf diesen anderen Teil (16) stützt.

2. Ensemble nach Anspruch 1, **dadurch gekennzeichnet, dass** die Querverstärkungsmittel (26) zwei Halterungen (28) umfassen, die, bezogen auf die Achse der Lenkspindel (L), diametral entgegengesetzt sind.

3. Ensemble nach Anspruch 1 oder 2, **dadurch gekennzeichnet, dass** die Querverstärkungsmittel Mittel zur Querblockierung des Endstücks (30) der oder jeder Halterung (28) auf dem Teil (16), auf den das Endstück (30) gestützt ist, umfassen.

4. Ensemble nach Anspruch 3, **dadurch gekennzeichnet, dass** die Mittel zur Blockierung aus dem gleichen Material sind wie der Teil (16), auf den das Endstück (30) gestützt ist.

5. Ensemble nach Anspruch 4, **dadurch gekennzeichnet, dass** die Mittel zur Blockierung mindestens einen durch Zuschneiden und Falzen gebildeten Paken (34) in dem Teil (16), auf den das Endstück (30) gestützt ist, umfassen.

6. Ensemble nach Anspruch 5, **dadurch gekennzeichnet, dass** der oder jeder Haken (34) um eine Längskante der Halterung (28) gefaltet ist.

7. Ensemble nach einem der Ansprüche 5 oder 6, **dadurch gekennzeichnet, dass** der oder jeder Haken (34) in einem Längsbereich des Endstücks des Teils (16), auf den das Endstück (30) gestützt ist, ausgebildet ist.

8. Ensemble nach einem der vorstehenden Ansprüche, **dadurch gekennzeichnet, dass** die Querverstärkungsmittel (26) mindestens eine erste Halterung (28) umfassen, die aus dem gleichen Material ist wie der erste Teil (14) und sich in Richtung des zweiten Teils (16) erstreckt, wobei sich ein Endstück (30) der ersten Halterung (28) auf den zweiten Teil (16) stützt, und eine zweite Halterung (28), die aus dem gleichen Material ist wie der zweite Teil (16), sich in Richtung des ersten Teils (14) erstreckt, wobei sich ein Endstück (30) der zweiten Halterung (28) auf den ersten Teil (14) stützt.

9. Ensemble nach einem der vorstehenden Ansprüche, **dadurch gekennzeichnet, dass** der Zwischenteil (18) mehrere Laschen (20) umfasst, die sich im Wesentlichen in Längsrichtung zwischen dem ersten Teil (14) und dem zweiten Teil (16) erstrecken, wobei die Laschen (20) radial vorgeformt sind, um die Verformung des Zwischenteils (18) in Längsrichtung zu kontrollieren.

10. Kraftfahrzeug, umfassend einen Lenkzusammenbau nach einem der vorstehenden Ansprüche.
